(19) Europäisches Patentamt
European Patent Office
Office européen des brevets

(11) **EP 1 037 443 B1**

(12) **EUROPEAN PATENT SPECIFICATION**

(45) Date of publication and mention
of the grant of the patent:
**26.10.2005 Bulletin 2005/43**

(51) Int Cl.7: **H04L 27/36**, H03C 5/00

(21) Application number: **00105711.6**

(22) Date of filing: **17.03.2000**

(54) **OFDM modulator and digital broadcasting apparatus using the same**

OFDM-Modulator und diesen nutzende digitale Rundfunkvorrichtung

Modulateur OFDM et dispositif de diffusion numérique l'utilisant

(84) Designated Contracting States:
**DE FR GB IT**

(30) Priority: **17.03.1999 JP 7128699**

(43) Date of publication of application:
**20.09.2000 Bulletin 2000/38**

(73) Proprietor: **NEC CORPORATION**
**Minato-ku, Tokyo 108-01 (JP)**

(72) Inventors:
• **Mori, Nobuyuki**
**Tokyo (JP)**

• **Takeda, Haruo**
**Tokyo (JP)**

(74) Representative:
**von Samson-Himmelstjerna, Friedrich et al**
**SAMSON & PARTNER**
**Widenmayerstrasse 5**
**80538 München (DE)**

(56) References cited:
**WO-A-00/38388** **US-A- 4 580 111**
**US-A- 4 804 931** **US-A- 5 469 127**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

The present invention relates to a digital signal transmission apparatus and more particularly to an OFDM (Orthogonal Frequency Division Multiplexing) modulator and a digital broadcasting apparatus using the same.

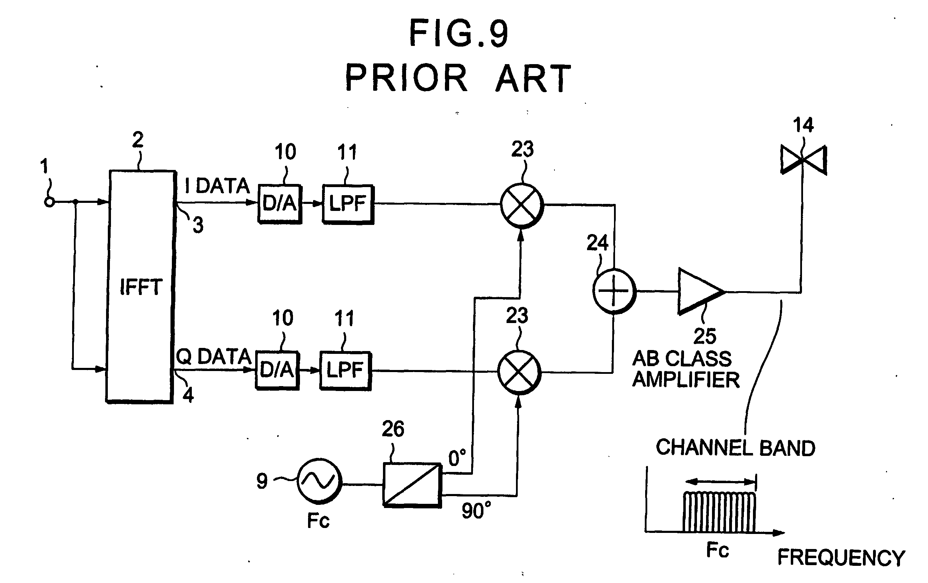

A conventional OFDM digital broadcasting apparatus, particularly an OFDM modulator thereof, will be described with reference to FIG. 9. As shown, the OFDM modulator includes an input terminal 1 to which an input is applied, a discrete inverse Fourier transformer (IFFT) 2, two digital-to-analog converters (D/As) 10, two low pass filters (LPFs) 11, two modulators 23, a combiner 24, an A class or an AB class linear power amplifier 25, a 0°/90° phase distributor 26, and a carrier generator 9. The input applied to the input terminal 1 is a digital signal encoded by, e.g., an MPEG (Moving Picture coding Experts Group) 2 standard. The IFFT 2 transforms the input to I data and Q data which are a real axis component and an imaginary axis component, respectively. The I data and Q data each are input to one of the D/As 10. The D/As 10 respectively convert the I data and Q data input thereto to corresponding analog signals. The analog signals are then subjected to quadrature modulation. The power amplifier 25 amplifies the resulting modulated signal. The amplified signal output from the power amplifier 25 is sent via an antenna 14. As for the frequency spectrum, several hundreds to several thousands of carrier signals are distributed in the channel frequency band.

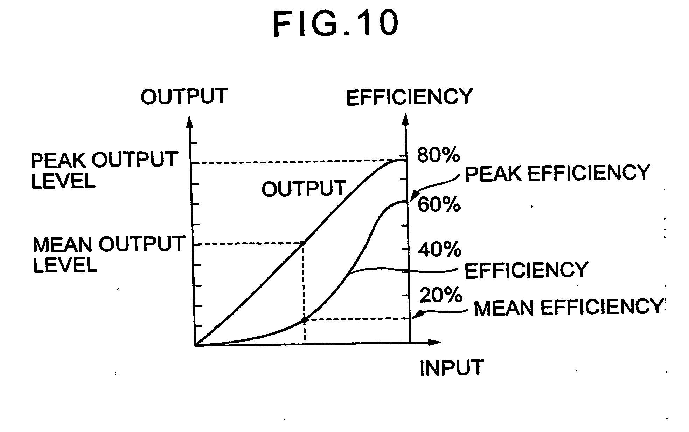

The problem with the above conventional broadcasting apparatus is that a multicarrier signal output from the OFDM modulator is amplified by the A class or AB class linear power amplifier 25, resulting in inefficient use of power. Specifically, as shown in FIG. 10, the peak level and mean level of the multicarrier signal are greatly different from each other. While the linear power amplifier 25 is used to amplify such a multicarrier signal with a minimum of distortion, the amplifier 25 has a mean output level which is about one-tenth of the peak output. The efficiency and therefore mean operation efficiency of the A class or AB class power amplifier 25 decreases with a decrease in output level.

The document US A 5,469,127 discloses an arrangement including a modulator, wherein a power amplifier comprises a combiner including one 3db coupler.

The document US A 4,580,111 discloses an amplitude modulator including a combiner using a coil-transformer type.

SUMMARY OF THE INVENTION

It is an object of the present invention to provide a digital broadcasting apparatus capable of efficiently amplifying a multicarrier signal output from the above OFDM modulator.

An OFDM modulator includes circuitry for converting real axis data and imaginary axis data output from a discrete inverse Fourier transformer to amplitude data and phase data on polar coordinates, and modulating the phase of a carrier wave on the basis of the phase data.

In accordance with the present invention, the aforementioned object is achieved by the subject matter of claim 1 which includes inter alia, a digital broadcasting apparatus includes the above OFDM modulator, and a power amplifier for executing amplitude modulation with the carrier wave output from the OFDM modulator with the amplitude data also output from the OFDM modulator. The power amplifier comprises a combiner circuitry including arrangements of two 3 dB couplers and a phase shifter, and a control circuit for controlling said switches and said phase shifter in accordance with said amplitude data.

BRIEF DESCRIPTION OF THE DRAWINGS

The above and other objects, features and advantages of the present invention will become more apparent from the following detailed description taken with the accompanying drawings in which:

Fig. 1 is a block diagram schematically showing a digital broadcasting apparatus embodying the present invention;
FIG. shows I data and Q data in the form of polar coordinates;
FIGS. 3A and 3B are circuit diagrams each showing a particular specific configuration of a power amplifier included in the illustrative embodiment;
FIG. 4 is a graph showing the efficiency characteristic of a voltage-controlled C class power amplifier;
FIG. 5 is a schematic block diagram showing an alternative embodiment of the present invention;
FIG. 6 is a graph showing imaginary combined power available with the alternative embodiment;
FIG. 7 is a graph showing the combined efficiency characteristic of N power amplifiers included in the alternative embodiment;
FIGS. 8A and 8B are circuit diagrams showing a specific configuration of a combiner included in the alternative embodiment;

FIG. 9 is a schematic block diagram showing a conventional OFDM digital broadcasting apparatus; and
FIG. 10 is a graph showing the efficiency characteristic of an AB class power amplifier included in the broadcasting apparatus of FIG. 9.

DESCRIPTION OF THE PREFERRED EMBODIMENTS

First, the principle of the present invention on which illustrative embodiments to be described are based will be described. Assume that a discrete inverse Fourier transformer outputs COS ($\omega$st) = I data and SIN($\omega$st) = Q data. Then, these outputs may be converted to polar coordinates data:

$$\text{amplitude data: } r = \sqrt{I^2 + Q^2} = \sqrt{\cos^2(\overline{\omega}_s t) + \sin^2(\overline{\omega}_s t)} = 1$$

$$\text{phase data: } \vartheta = \tan^{-1}\frac{Q}{I} = \tan^{-1}\frac{\sin(\overline{\omega}_s t)}{\cos(\overline{\omega}_s t)} = \overline{\omega}_s t$$

When the phase of a carrier wave Vc*COS($\omega$ct) is modulated by the phase data, there is produced:

$$Vc^{\cdot}COS(\omega ct - \theta)$$

The above phase-modulated carrier wave is input to a power amplifier. The output of the power amplifier is controlled on the basis of the amplitude data produced by the polar coordinates conversion, thereby effecting amplitude modulation. In this sense, the power amplifier plays the role of a multiplexer and outputs the following product:

$$r^{\cdot}Vc^{\cdot}COS(\omega c - \theta) = 1^{\cdot}Vc'COS(\omega ct - \omega st)$$

$$= Vc^{\cdot}COS\{(\omega c - \omega s)^{\cdot}t\}$$

$$= Vc^{\cdot}COS\{(\omega c - \omega s)^{\cdot}t\}$$

The above output of the power amplifier has a single sideband (SSB) waveform identical with the following waveform produced by modulating the I data = COS($\omega$st) and Q data = SIN($\omega$ st) with Vc*COS($\omega$ ct) by quadrature modulation:

$$COS(\omega st)^{\cdot}Vc^{\cdot}COS(\omega ct) + SIN(\omega st)^{\cdot}Vc^{\cdot}COS(\omega ct + \pi/2)$$

$$= Vc^{\cdot}Cos\{(\omega c - \omega s)t\}$$

It follows that by transforming the outputs of the discrete inverse Fourier transformer to amplitude data and phase data and then executing the above procedure, it is possible to output a waveform identical with one available with the conventional technology.

While the amplifier is caused to perform C class operation, an amplitude control circuit constantly controls the operation to a saturation level and thereby controls an output amplitude. This allows even a nonlinear C class amplifier to produce a linear output and insures high efficiency of the C class operation.

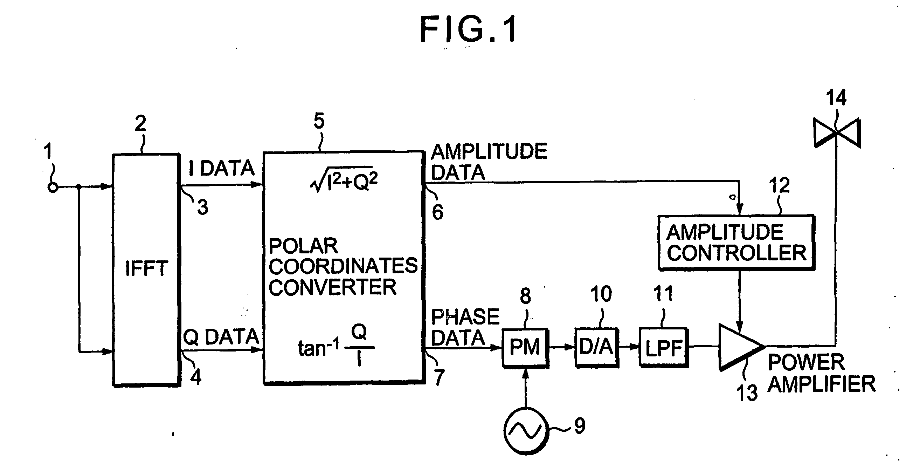

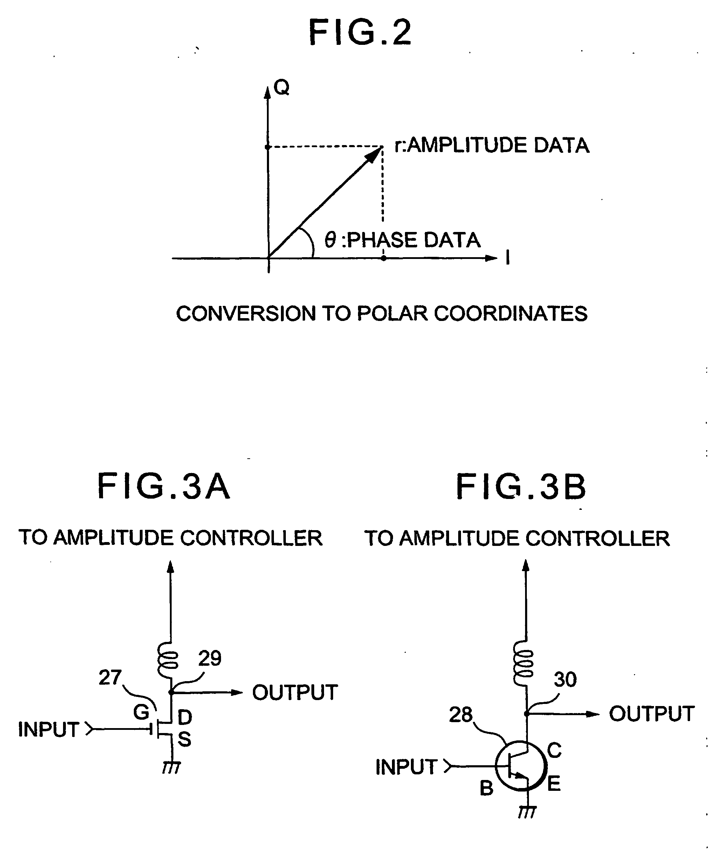

Referring to FIG. 1, a digital broadcasting apparatus embodying the present invention is shown and includes an IFFT 2. I data 3 and Q data 4 output from the IFFT 2 are input to a polar coordinates converter 5 and converted to amplitude data 6 and phase data 7 thereby. FIG. 2 shows a relation between the I data 3 and Q data and the amplitude data 6 and phase data 7. A phase modulator (PM) 8 modulates a carrier signal output from a carrier generator 9 with the phase data 7. The modulated carrier signal is then converted to an analog signal by a D/A 10 and filtered by an LPF 11. The resulting output of the LPF 11 is input to a power amplifier 13 as an input RF (Radio Frequency) signal.

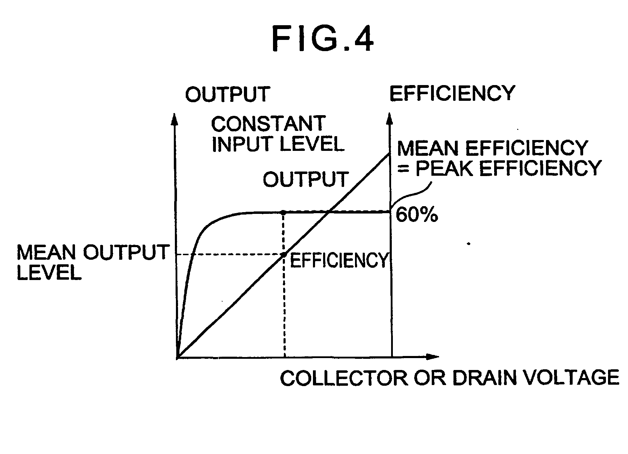

The power amplifier 13 is caused to perform C class operation while the input RF signal is maintained at a constant level. FIGS. 3A and 3B each show a particular specific configuration of the power amplifier 13. An FET (Field Effect Transistor) 27 and a bipolar transistor 28 shown in FIGS. 3A and 3B each are an amplifying device. The drain voltage or the collector voltage of the FET 27 or that of the bipolar transistor 28 is varied to vary the level of the output signal of the power amplifier 13. In this case, as shown in FIG. 4, so long as the output level of the drain voltage or that of the collector voltage is above a certain level, a constant efficiency is achievable without regard to the variation of the output signal level. An OFDM digital modulated wave is produced by controlling the output level of the power amplifier 12 on the basis of the previously stated amplitude data and effecting amplitude modulation.

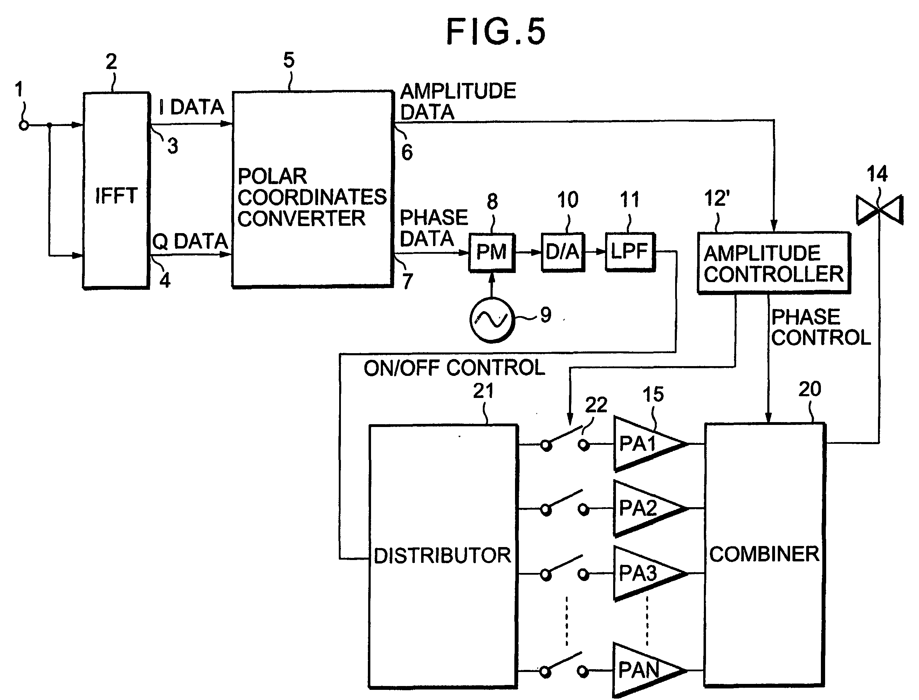

FIG. 5 shows an alternative embodiment of the present invention. As shown, the I data 3 and Q data 4 output from the IFFT 2 are input to the polar coordinates converter 5 as in the previous embodiment. The IFFT 2 converts the I data 3 and Q data 4 to the amplitude data 6 and phase data 7. Finally, the amplitude data 6 and phase-modulated carrier wave is produced.

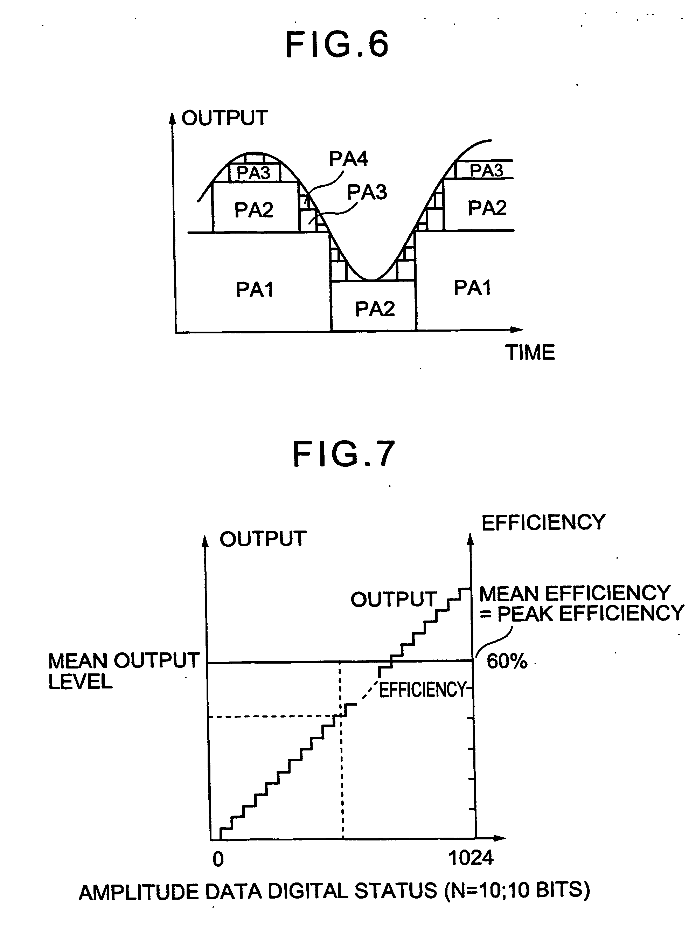

As shown in FIG. 5, the illustrative embodiment includes a power amplifying section made up of a distributor 21, N switches 22, N C class power amplifiers 15, a combiner 20, and an amplitude controller 12'. The distributor 21 distributes the RF signal input thereto to N outputs thereof. The switches 22 each ON/OFF control one of the N RF signals. The power amplifiers 15 each have an output which is a $2^N$ ratio. The combiner 20 combines the outputs of the power amplifiers 15. The amplitude controller 12' controls the combiner 20 and switches 22. The power amplifiers 15 each have a particular output weight. FIG. 6 shows specific output weights PA1, PA2, PA3 and so forth assigned to the power amplifiers 15.

In operation, the switches 22 each ON/OFF control the RF signal input thereto on the basis of a digital signal representative of the amplitude data 6. The combiner 20 therefore combines only the outputs of the power amplifiers 15 whose inputs are in an ON state, thereby producing an output corresponding to the amplitude data. Consequently, as shown in FIG. 7, the level of the output signal can be varied on the basis of the combination of ON/OFF states of the power amplifiers 15. That is, amplitude modulation is effected by using the amplitude data 6 (see FIG. 6). In this case, the efficiency always has a peak value because the power amplifiers 15 in the ON state are performing C class operation.

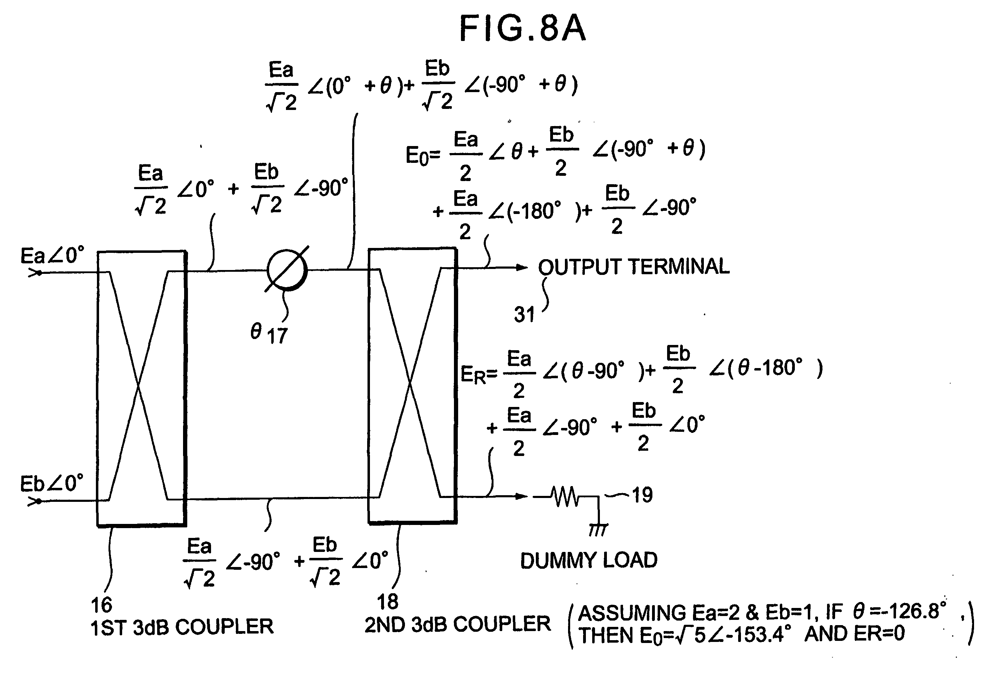

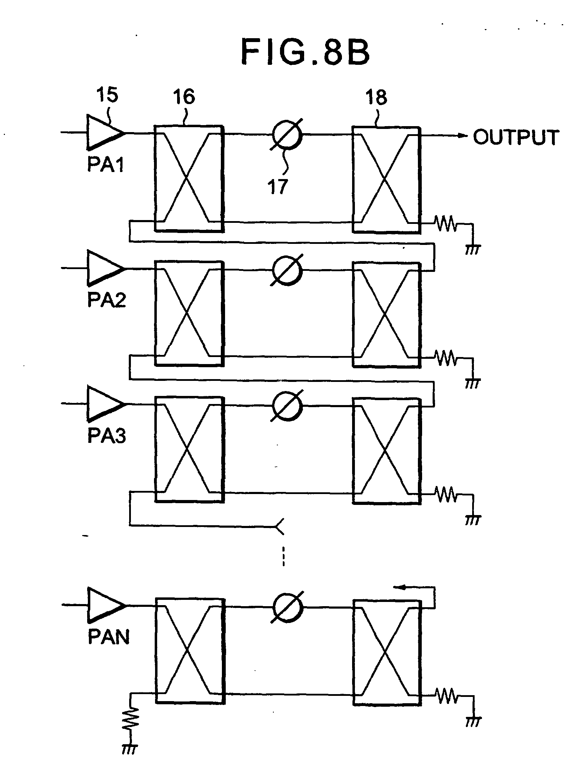

FIGS. 8A and 8B show a specific configuration of the combiner 20. Specifically, FIGS. 8A and 8B respectively show the basic portion and the overall configuration of the combiner 20. As shown in FIG. 8A, the basic portion includes two 3 dB couplers 16 and 18 and a phase shifter 17. As shown in FIG. 8B, the general configuration has such basic portions equal in number to the power amplifiers 15 connected in series.

In the basic portion, when two signals different in power level from each other are input to the first 3 dB coupler 16 with the same phase, the amplitudes are averaged with the result that signals with the same amplitude are output from the coupler 16. Because the phase depends on the difference in level between input power, the phase shifter 17 gives the output signals of the coupler 16 a relative phase difference of 90°, i.e., delivers signals identical in amplitude, but different in phase by 90°, to the second 3 dB coupler 18. As a result, all the outputs are delivers to an output terminal 31. Although the level of the signal input to the individual basic portion of the combiner 20 depends on whether or not the output signal of the associated power amplifier 15 is present, it is possible to combine power without any loss by controlling the phase shifters 17.

In summary, in accordance with the present invention, an OFDM digital broadcasting apparatus transforms an input signal to polar coordinates representative of amplitude data and phase data, modulates a carrier wave in accordance with the phase data, and varies the level of the carrier wave in accordance with the amplitude data. The apparatus is therefore capable of utilizing power more efficiently than the conventional OFDM digital broadcasting apparatus.

Various modifications will become possible for those skilled in the art after receiving the teachings of the present disclosure without departing from the scope thereof.

**Claims**

**1.** A digital broadcasting apparatus comprising:

an OFDM modulator comprising a discrete inverse Fourier transformer (2) for delivering real axis data and imaginary axis data, circuitry (5) for converting the real axis data and imaginary axis data output from said discrete inverse Fourier transformer into amplitude data and phase data on polar coordinates, and a modulating circuitry (8) for modulating the phase of a carrier wave on the basis of said phase data to deliver a modulated carrier wave; and
a power amplifier circuitry (12', 15, 20, 21, 22) for executing amplitude modulation on the modulated carrier wave output from said OFDM modulator with said amplitude data output from said OFDM modulator, wherein said power amplifier circuitry includes N power amplifying units (15) each having different output power according to weights of each bits of said amplitude data and operating in a C class, N switches for respectively ON/OFF controlling inputs of said N power amplifying units and a combiner circuitry (12', 20) comprising N arrangements for combining outputs of said N power amplifying units,

**characterized in that**
each of said N arrangements comprises two 3 dB couplers (16, 18) and a phase shifter (17), and the combiner circuitry comprises a control circuit (12') for controlling said switches and said phase shifters in accordance with said amplitude data.

2. A digital broadcasting apparatus as claimed in claim 1, wherein, in each said arrangement, said phase shifter is disposed between said two 3 dB couplers and a phase of said phase shifter is controlled such that a phase difference of two input signals of the last 3 dB coupler becomes 90 degrees.

**Patentansprüche**

1. Digitale Rundfunkvorrichtung mit:

einem OFDM-Modulator, der einen diskreten inversen Fourierübertrager (2), um reelle Achsendaten und imaginäre Achsendaten zu liefern, eine Schaltkreisanordnung (5), um die Ausgabe reeller Achsendaten und imaginärer Achsendaten des diskreten inversen Fourier-übertragers in Amplitudendaten und Phasendaten in Polarkoordinaten umzuwandeln, und eine Modulationsschaltkreisanordnung (8) umfasst, um die Phase einer Trägerwelle auf der Grundlage der Phasendaten zu modulieren, um eine modulierte Trägerwelle zu liefern; und einer Leistungsverstärkerschaltkreisanordnung (12', 15, 20, 21, 22), um eine Amplitudenmodulation der modulierten Trägerwellenausgabe von dem OFDM-Modulator auf der Grundlage der Amplitudendatenausgabe von dem OFDM-Modulator auszuführen, wobei die Leistungsverstärkerschaltkreisanordnung N Leistungsverstärkereinheiten (15), die jeweils eine unterschiedliche Ausgangsleistung gemäß Wertigkeiten von allen Bits der Amplitudendaten aufweisen und in einer C-Klasse arbeiten, N Schalter, um das Ein-/Ausschalten von Eingängen der N Leistungsverstärkereinheiten entsprechend zu steuern, und eine Kombinatorschaltkreisanordnung (12', 20) aufweist, die N Anordnungen umfasst, um Ausgaben der N Leistungsverstärkereinheiten zu kombinieren;

**dadurch gekennzeichnet dass**
jeder der N Anordnungen zwei 3 dB Koppler (16, 18) und einen Phasenschieber (17) umfasst; und die Kombinatorschaltkreisanordnung einen Steuerschaltkreis (12') umfasst, um die Schalter und die Phasenschieber gemäß den Amplitudendaten zu steuern.

2. Digitale Rundfunkvorrichtung nach Anspruch 1, bei der in jeder Anordnung der Phasenschieber zwischen den zwei 3 dB Kopplern angeordnet ist und eine Phase des Phasenschiebers so gesteuert wird, dass eine Phasendifferenz von zwei Eingangssignalen des letzten 3 dB Kopplers zu 90 Grad wird.

**Revendications**

1. Dispositif de diffusion numérique, comprenant :

un modulateur de multiplexage par répartition orthogonale de la fréquence ou OFDM comprenant un dispositif de transformation de Fourier inverse discrète (2) pour fournir des données d'axe réel et des données d'axe imaginaire, un circuit (5) pour convertir les données d'axe réel et les données d'axe imaginaire délivrées par ledit dispositif de transformation de Fourier inverse discrète en données d'amplitude et en données de phase sur des coordonnées polaires, et un circuit de modulation (8) pour moduler la phase d'une onde porteuse sur la base desdites données de phase afin de fournir une onde porteuse modulée ; et un circuit amplificateur de puissance (12', 15, 20, 21, 22) pour exécuter une modulation d'amplitude sur l'onde porteuse modulée délivrée par ledit modulateur OFDM avec lesdites données d'amplitude délivrées par ledit modulateur OFDM, dans lequel ledit circuit amplificateur de puissance inclut N unités amplificatrices de puissance (15) ayant chacune une puissance de sortie différente en fonction des pondérations de chaque bit desdites données d'amplitude et fonctionnant en classe C, N commutateurs pour commander respectivement sur MARCHE/ARRET les entrées desdites N unités amplificatrices de puissance, et un circuit multiplexeur (12', 20) comprenant N montages pour combiner les sorties desdites N unités amplificatrices de puissance,

**caractérisé en ce que**
chacun desdits N montages comprend deux coupleurs à 3 dB (16, 18) et un dispositif de déphasage (17), et le circuit multiplexeur comprend un circuit de commande (12') pour commander lesdits commutateurs et lesdits dispositifs de déphasage en fonction desdites données d'amplitude.

2. Dispositif de diffusion numérique selon la revendication 1, dans lequel, dans chaque dit montage, ledit dispositif de déphasage est disposé entre lesdits deux coupleurs à 3 dB, et une phase dudit dispositif de déphasage est commandée de telle manière qu'un déphasage des deux signaux d'entrée du dernier coupleur à 3 dB devient égal à 90 degrés.

# FIG.1

EP 1 037 443 B1

# FIG.2

CONVERSION TO POLAR COORDINATES

# FIG.3A

TO AMPLITUDE CONTROLLER

# FIG.3B

TO AMPLITUDE CONTROLLER

# FIG.4

OUTPUT        EFFICIENCY

CONSTANT
INPUT LEVEL      MEAN EFFICIENCY
= PEAK EFFICIENCY

OUTPUT

60%

MEAN OUTPUT
LEVEL           EFFICIENCY

COLLECTOR OR DRAIN VOLTAGE

FIG.5

EP 1 037 443 B1

# FIG.6

# FIG.7

AMPLITUDE DATA DIGITAL STATUS (N=10;10 BITS)

11

# FIG.8A

$$\frac{Ea}{\sqrt{2}} \angle (0° + \theta) + \frac{Eb}{\sqrt{2}} \angle (-90° + \theta)$$

$$E_0 = \frac{Ea}{2} \angle \theta + \frac{Eb}{2} \angle (-90° + \theta)$$

$$\frac{Ea}{\sqrt{2}} \angle 0° + \frac{Eb}{\sqrt{2}} \angle -90°$$

$$+ \frac{Ea}{2} \angle (-180°) + \frac{Eb}{2} \angle -90°$$

Ea∠0°

OUTPUT TERMINAL

$\theta$ 17

31

$$E_R = \frac{Ea}{2} \angle (\theta - 90°) + \frac{Eb}{2} \angle (\theta - 180°)$$

Eb∠0°

$$+ \frac{Ea}{2} \angle -90° + \frac{Eb}{2} \angle 0°$$

19

$$\frac{Ea}{\sqrt{2}} \angle -90° + \frac{Eb}{\sqrt{2}} \angle 0°$$

DUMMY LOAD

16
1ST 3dB COUPLER

18
2ND 3dB COUPLER

$\left( \begin{array}{l} \text{ASSUMING } Ea=2 \ \& \ Eb=1, \text{ IF } \theta = -126.8°, \\ \text{THEN } E_0 = \sqrt{5} \angle -153.4° \text{ AND } ER=0 \end{array} \right)$

EP 1 037 443 B1

# FIG.8B

FIG.9
PRIOR ART

IFFT

I DATA

Q DATA

D/A — LPF

D/A — LPF

AB CLASS AMPLIFIER

CHANNEL BAND

Fc

FREQUENCY

0° 90°

Fc

# FIG.10